# EUROPÄISCHE PATENTSCHRIFT

(11) **EP 1 661 653 B1**
(45) Veröffentlichungstag und Bekanntmachung des Hinweises auf die Patenterteilung: **20.11.2013**
(21) Anmeldenummer: 05110021.2
(22) Anmeldetag: 26.10.2005
(51) Int. Cl.: B23D 61/02, B28D 1/12

(54) **Stammblatt für ein Kreissägeblatt mit Mineral-Schneidsegmenten**
Blade body for a circular saw blade with cutting elements for mineral cutting
Corps de lame pour une lame de scie circulaire avec des éléments de coupe pour la coupe de minéraux

(30) Priorität: 25.11.2004 DE 102004056854
(43) Veröffentlichungstag der Anmeldung: 31.05.2006
(73) Patentinhaber: HILTI Aktiengesellschaft, 9494 Schaan (LI)
(72) Erfinder: Hoop, Matthäus, 9492, Eschen (LI); Kowanda, Claudia, 8553, Lachen (CH)
(74) Vertreter: Wildi, Roland

(56) Entgegenhaltungen:
- EP-A- 1 130 126
- FR-A- 1 568 331
- FR-A- 2 541 156
- GB-A- 1 166 369
- US-A- 3 133 533
- US-A- 3 981 216
- US-A1- 2003 209 125
- US-B1- 6 353 205

## Beschreibung

Die vorliegende Erfindung betrifft ein Stammblatt für ein kreisförmiges Schneidwerkzeug mit Mineral-Schneidsegmenten, wie z. B. Diamant-Kreissägeblättern oder -Trennscheiben, der im Oberbegriff des Patentanspruchs 1 sowie des nebengeordneten Patentanspruchs 2 genannten Art. Ein solches Stammblatt ist der FR 2 541 156 zu entnehmen. Bei derartigen Stammblättern werden Schneidsegmente mit einer mineralischen Schneidkomponente, wie z. B. in eine Matrix eingebettete Diamanten, umfänglich an diesem angeordnet um ein Kreissägeblatt zu bilden.

Aus der US 4 739 745 ist ein gattungsgemässes Stammblatt eines Diamant-Kreissägeblatts bekannt, an dessen Aussenumfang Schlitze angeordnet sind. Diese Schlitze weisen im Wesentlichen radial verlaufende Seitenkanten und einen halbkreisförmigen Schlitzgrund auf und separieren einzelne Trägerabschnitte voneinander an denen umfänglich Diamant-Schneidsegmente angeordnet sind.

Von Nachteil bei derartigen Stammblättern ist, dass bei extremer Belastung während des Einsatzes des Diamant-Kreissägeblatts Risse entstehen, die sich vom Schlitzgrund aus in das Stammblatt hinein erstrecken und beim weiteren Betrieb zu Ausfall des Kreissägeblatts führen.

Aus der DE 32 40 100 A1 ist ein weiteres Kreissägeblatt bekannt bei dem an einem Stammblatt umfänglich eine Vielzahl von Schneidsegmenten angeordnet sind. Die Schneidsegmente weisen dabei eine zahnförmige Form auf. Die Schlitze im Stammblatt schliessen sich formschlüssig an die Vorder- und Hinterkanten der Schneidsegmente an und verlaufen schräg zur radialen Richtung wobei die Seitenkanten des Schlitzes und der Schlitzgrund bogenförmig ist.

Nachteilig ist auch hier, dass bei extremer Belastung während des Einsatzes des Kreissägeblatts Risse entstehen.

Aus der FR 2 541 156 A1 ist Kreissägeblatt mit einem Stammblatt bekannt, an dessen äusserem Umfang Schneidzähne vorgesehen sind. Zwischen in Umfangsrichtung benachbarten Schneidzähnen ist jeweils ein Spahnaufahmeraum vorgesehen, in den eine radial verlaufende Aussparung mündet. Die Aussparungen können dabei auch in einem Winkel zu der radialen Richtung verlaufen.

Aus der FR 1 568 331 A1 ist ein Diamantsägeblatt bekannt, in dessen Stammblatt zum Umfang hin offene Nuten eingelassen sind, die in einem Winkel von 15° - 20° zur radialen Richtung verlaufen können.

Aus der US 2003/0209125 A1 ist ein Kreissägeblatt mit einem äusserem Umfang bekannt, das eine Mehrzahl von gebogenen Schlitzen aufweist, die am äusseren Umfang beabstandet voneinander angeordnet sind. Schneidsegmente sind jeweils zwischen zwei benachbarten Schlitzen am äusseren Umfang des Kreissägeblatts angeordnet.

Aus der EP 1 130 126 A2 ist ein Stammblatt für Dünnschnitt-Kreissägen bekannt, an dessen Aussenumfang halbkreisförmige Ausnehmungen in regelmässigen Abständen zueinander angeordnet sind.

Die Aufgabe der vorliegenden Erfindung liegt daher darin, ein Stammblatt für ein kreisförmiges Schneidwerkzeug mit mineralischen Schneidsegmenten zu entwickeln, das die genannten Nachteile vermeidet.

Diese Aufgabe wird erfindungsgemäss durch die Merkmale des Anspruchs 1 gelöst. Demnach verlaufen die Seitenkanten der Schlitze parallel zueinander und sind jeweils in einem Winkel α in einem Bereich von 5° bis 25° zu die Seitenkanten kreuzenden Radialen des Stammblatts geneigt wobei die maximale radiale Schlitztiefe des Schlitzgrundes max. 3 % des Durchmessers des Stammblatts beträgt. Bei einer genau entgegengesetzt orientierten Neigung der Schlitze zur radialen Richtung gilt dieser Winkel α entsprechend. Durch diese Geometrie der Schlitze kann die Rissbildung im Stammblatt unabhängig von der Rotationsrichtung des Stammblatts bzw. eines mit diesem gefertigten Kreissägeblatts bei hoher Belastung deutlich vermindert werden.

Die geneigte bzw. schräge Ausrichtung der Seitenkanten entspricht bei einer Rotationsrichtung des Stammblatts in Richtung der Schräge in vorteihafter Weise der Flussrichtgung eines Kühlwasserfilms, der in der Regel auch das abgebaute Material transportiert. Auch bei geringem Kühlwasservolumen wird so eine gute Kühlung erreicht.

Erfindungsgemäß verläuft der Schlitzgrund gerade. Dieses schliesst nicht aus, dass im Anschlussbereich an die Seitenkanten des Schlitzes jeweils ein bogenförmiger Übergangsbereich vorhanden sein kann.

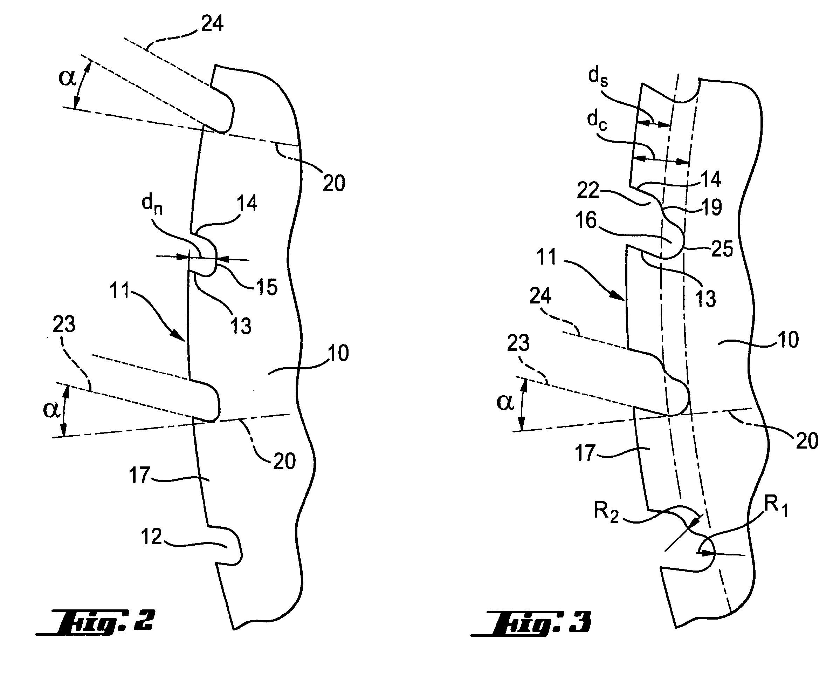

Bei vorteilhaften Ausgestaltungen der Erfindung weisen die Schlitze die aus Fig. 2 ersichtliche Formgebung auf.

Die Aufgabe wird ferner durch die Merkmale des Anspruchs 2 gelöst. Demnach verlaufen die Seitenkanten der Schlitze parallel zueinander und sind jeweils in einem Winkel α in einem Bereich von 5° bis 25° zu die Seitenkanten kreuzenden Radialen des Stammblatts geneigt wobei der Schlitzgrund zweistufig ist und eine bogenförmige Vertiefung aufweist und die maximale radiale Schlitztiefe des Schlitzgrundes in der Vertiefung max. 3,5 % des Durchmessers des Stammblatts beträgt. Bei einer genau entgegengesetzt orientierten Neigung der Schlitze zur radialen Richtung gilt dieser Winkel α entsprechend. Durch diese Geometrie der Schlitze kann die Rissbildung im Stammblatt unabhängig von der Rotationsrichtung des Stammblatts bzw. eines mit diesem gefertigten Kreissägeblatts bei hoher Belastung deutlich vermindert werden.

Bei vorteilhaften Ausgestaltungen der Erfindung weisen die Schlitze die aus Fig. 3 ersichtliche Formgebung auf.

Weitere Vorteile und Massnahmen der Erfindung ergeben sich aus der nachfolgenden Beschreibung und den Zeichnungen. In den Zeichnungen ist die Erfindung in mehreren Ausführungsbeispielen dargestellt.

### Es zeigen:

- Fig. 1: ein erfindungsgemässes Stammblatt eines Diamant- Kreissägeblatts in Seitenansicht,
- Fig. 2: einen Ausschnitt des Stammblatts aus Fig. 1,
- Fig. 3: einen Ausschnitt eines weiteren Stammblatts.

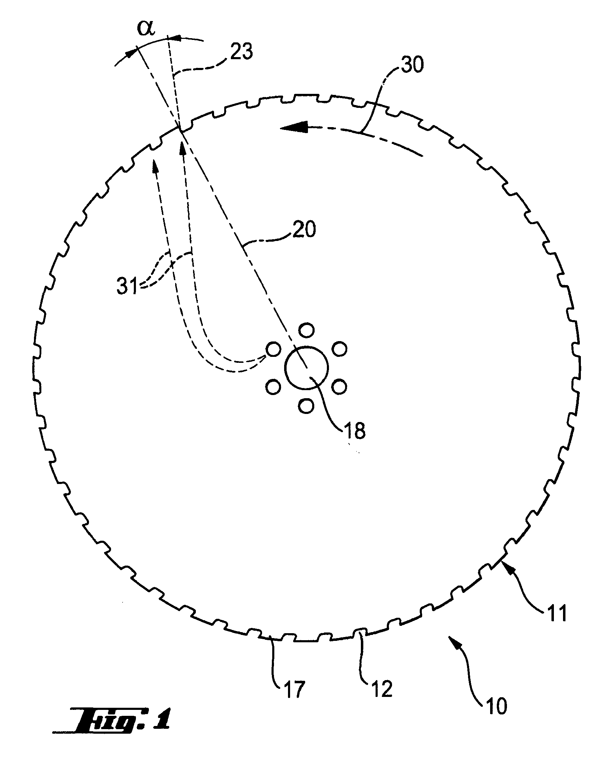

Das in den Figuren 1 bis 2 dargestellte Stammblatt 10 eines kreisförmigen Schneidwerkzeugs, wie eines Diamant-Kreissägeblatts (im Fachjargon auch als Diamantsägeblatt bezeichnet), weist an seinem Aussenumfang 11 regelmässig angeordnete Schlitze 12 auf. Zwischen den Schlitzen 12 liegen Trägerabschnitte 17, an denen z. B. Diamant-Schneidsegmente zur Bildung eines Diamant-Kreissägeblatts anordnenbar sind. Das Stammblatt 10 weist ferner ein als Lagerloch ausgebildetes Lagermittel 18 auf, über welches es an bzw. auf einer Achse oder Spindel eines Arbeitsgerätes, wie z. B. einer Kreissäge anordnenbar ist. Als Material für das Stammblatt kommt z. B. ein Werkzeugstahl in Frage. Auch Verbundmaterialien, wie z. B. Materialien in Sandwichbauweise kommen in Frage.

Die Schlitze 12 weisen Seitenkanten 13, 14 auf, die im Wesentlichen, d.h. im Rahmen der Fertigungstoleranzen, parallel zueinander verlaufen. Parallel zueinander im Sinne der Erfindung schliesst geringe Abweichungen der Parallelität zueinander von bis zu 1° nicht aus. Die Seitenkanten 13, 14, durch die zur Verdeutlichung Hilfslinien 23, 24 hindurchgelegt wurden, sind zu Radialen 20, gedachten Linien, die in radialer Richtung vom Zentrum des Stammblatts 10 ausgehen und jeweils die Seitenkanten 13, 14 kreuzen, in einem Winkel α von ca. 20° geneigt. Durch diese Geometrie der Schlitze 12 kann die Rissbildung im Stammblatt 10 bei hoher Belastung deutlich vermindert werden. Überraschenderweise ist die Rissbildung unabhängig von der Rotationsrichtung des Stammblatts bzw. eines mit diesem gefertigten Kreissägeblatts vermindert. Der Schlitzgrund 15 ist im Wesentlichen gerade ausgebildet. Die Schlitztiefe dₙ beträgt 0,5 bis 3 % des Durchmessers des Stammblatts 10. Bei einer Rotationsrichtung 30 des Stammblatts 10 wird ein hier mit den gestrichelten Pfeilen 31 angedeuteter Kühlwasserstrom bzw. Kühlwasserfilm zumindest im radial äusseren Bereich des Stammblatts 10 im Wesentlichen in Richtung der Neigung der Schlitze 12 fliessen.

Das in Fig. 3 ausschnittsweise wiedergegebene Stammblatt 10 unterscheidet sich von dem vorhergehend dargestellten dadurch, dass der Schlitzgrund 25 der Schlitze 22 zweistufig ist und eine Vertiefung 16 aufweist. Die maximale radiale Schlitztiefe d_{c} der Vertiefung 16 ist grösser als die radiale Schlitztiefe dₛ einer Stufe 19 des Schlitzgrundes 15. Die Tiefe d_{c} der Vertiefung beträgt dabei vorzugsweise max. 3,5 % des Durchmessers des Stammblatts 10. Die Vertiefung 16 ist bogenförmig ausgebildet und weist einen Radius R₁ auf, der dem 0,1 bis 6-fachen eines Radius R₂ der Stufe 19 entspricht. Auch durch diese Geometrie der Schlitze 12 kann die Rissbildung unabhängig von der Drehrichtung im Stammblatt 10 bei hoher Belastung deutlich vermindert werden.

## Patentansprüche

1. Stammblatt für ein kreisförmiges Schneidwerkzeug mit Mineral-Schneidsegmenten, wie Diamant-Kreissägeblättern oder -Trennscheiben, an dessen Aussenumfang (11) Schlitze (12, 22) angeordnet sind zwischen denen sich Trägerabschnitte (17) für Schneidsegmente befinden, wobei die Schlitze (12, 22) gerade verlaufende Seitenkanten (13, 14) und einen radial innen liegenden Schlitzgrund (15, 25) aufweisen, wobei der Schlitzgrund (15) gerade verläuft und
die Seitenkanten (13, 14) der Schlitze (12, 22) parallel zueinander verlaufen, **dadurch gekennzeichnet, dass** die Seitenkanten (13,14) jeweils in einem Winkel (α) in einem Bereich von 5° bis 25° zu die Seitenkanten (13, 14) kreuzenden Radialen (20) des Stammblatts (10) geneigt sind und dass die maximale radiale Schlitztiefe dₙ des Schlitzgrundes (15) des Schlitzes (12) max. 3 % des Durchmessers des Stammblatts (10) beträgt.
dass der Schlitzgrund (25) zweistufig ist und eine bogenförmige Vertiefung (16) aufweist
dass die maximale radiale Schlitztiefe d_{c} des Schlitzgrundes (25) in der Vertiefung (16) max. 3,5 % des Durchmessers des Stammblatts (10) beträgt.

2. Stammblatt für ein kreisförmiges Schneidwerkzeug mit Mineral-Schneidsegmenten, wie Diamant-Kreissägeblättern oder -Trennscheiben, an dessen Aussenumfang (11) Schlitze (12, 22) angeordnet sind zwischen denen sich Trägerabschnitte (17) für Schneidsegmente befinden, wobei die Schlitze (12, 22) gerade verlaufende Seitenkanten (13, 14) und einen radial innen liegenden Schlitzgrund (15, 25) aufweisen, wobei
die Seitenkanten (13, 14) der Schlitze (12, 22) parallel zueinander verlaufen, **dadurch gekennzeichnet, dass** die Seitenkanten (13,14) jeweils in einem Winkel (α) in einem Bereich von 5° bis 25° zu die Seitenkanten (13, 14) kreuzenden Radialen (20) des Stammblatts (10) geneigt sind, dass der Schlitzgrund (25) zweistufig ist und eine bogenförmige Vertiefung (16) aufweist und dass die maximale radiale Schlitztiefe d_{c} des Schlitzgrundes (25) in der Vertiefung (16) max. 3,5 % des Durchmessers des Stammblatts (10) beträgt.

## Claims

1. Core blade for a circular cutting tool having mineral cutting segments, such as diamond circular saw blades or diamond cutoff blades, in the outer circumference (11) of which are arranged slots (12, 22) between which are situated supporting portions (17) for cutting segments, the slots (12, 22) having lateral edges (13, 14) which extend in a straight line and a bottom end (15, 25) which is situated inwards radially, the bottom end (15) of the slots (12, 22) extending in a straight line and the lateral edges (13, 14) thereof extending parallel to one another, **characterised in that** the lateral edges (13, 14) are each inclined at an angle (α) ranging from 5° to 25° to the radiuses (20) of the core blade (10) which intersect the lateral edges (13, 14) and **in that** the maximum radial slot depth dₙ to the bottom end (15) of the slots (12) is a maximum of 3% of the diameter of the core blade (10).

2. Core blade for a circular cutting tool having mineral cutting segments, such as diamond circular saw blades or diamond cutoff blades, in the outer circumference (11) of which are arranged slots (12, 22) between which are situated supporting portions (17) for cutting segments, the slots (12, 22) having lateral edges (13, 14) which extend in a straight line and a bottom end (15, 25) which is situated inwards radially and the lateral edges (13, 14) of the slots (12, 22) extending parallel to one another, **characterised in that** the lateral edges (13, 14) are each inclined at an angle (α) ranging from 5° to 25° to the radiuses (20) of the core blade (10) which intersect the lateral edges (13, 14), **in that** the bottom end (25) of the slots is two-stepped and has an arcuate depression (16), and **in that** the maximum radial slot depth d_{c} to the bottom end (25) of the slots in the depression (16) is a maximum of 3.5% of the diameter of the core blade (10).

## Revendications

1. Corps de lame pour un outil de coupe circulaire avec des segments de coupe de minéraux, tel que des lames de scie circulaire à diamant ou des meules tronçonneuses à diamant, sur la circonférence extérieure (11) duquel sont agencées des entailles (12, 22) entre lesquelles se situent des parties d'appui (17) pour des segments de coupe, dans lequel les entailles (12, 22) comportent des bords latéraux s'étendant linéairement (13, 14) et un fond d'entaille (15, 25) situé radialement vers l'intérieur, dans lequel le fond d'entaille (15) s'étend linéairement et les bords latéraux (13, 14) des entailles (12, 22) s'étendent parallèlement l'un à l'autre, **caractérisé en ce que** les bords latéraux (13, 14) sont respectivement inclinés à un angle (α) dans une plage de 5° à 25° par rapport aux axes diagonaux (20) du corps de lame (10) qui croisent les bords latéraux (13, 14), et **en ce que** la profondeur d'entaille radiale maximale dₙ du fond d'entaille (15) de l'entaille (12) est au maximum égale à 3 % du diamètre du corps de lame (10).

2. Corps de lame pour un outil de coupe circulaire avec des segments de coupe de minéraux, tel que des lames de scie circulaire à diamant ou des meules tronçonneuses à diamant, sur la circonférence extérieure (11) duquel sont agencées des entailles (12, 22) entre lesquelles se situent des parties d'appui (17) pour des segments de coupe, dans lequel les entailles (12, 22) comportent des bords latéraux s'étendant linéairement (13, 14) et un fond d'entaille (15, 25) situé radialement vers l'intérieur, dans lequel les bords latéraux (13, 14) des entailles (12, 22) s'étendent parallèlement l'un à l'autre, **caractérisé en ce que** les bords latéraux (13, 14) sont respectivement inclinés à un angle (α) dans une plage de 5° à 25° par rapport aux axes diagonaux (20) du corps de lame (10) qui croisent les bords latéraux (13, 14), **en ce que** le fond d'entaille (25) est à deux étages et comporte un évidement en forme d'arc (16) et **en ce que** la profondeur d'entaille radiale maximale d_{c} du fond d'entaille (25) dans l'évidement (16) est au maximum égale à 3,5 % du diamètre du corps de lame (10).
